# EUROPÄISCHE PATENTANMELDUNG

(11) **EP 1 657 688 A1**
(43) Veröffentlichungstag der Anmeldung: **17.05.2006**
(21) Anmeldenummer: 05010547.7
(22) Anmeldetag: 14.05.2005
(51) Int. Cl.: G07G 1/00, G07F 7/00

(54) **Warenwirtschaftssystem eines Gastronomiebetriebes**

(30) Priorität: 15.11.2004 DE 102004017820
(71) Anmelder: Deppert, Kurt, 72657 Altenriet (DE)
(72) Erfinder: Deppert, Kurt, 72657 Altenriet (DE)
(74) Vertreter: Kohler Schmid Möbus

(57) **Zusammenfassung**

Die Erfindung betrifft ein Verfahren zur automatisierten Abrechnung von Speisen und/oder Getränken, insbesondere zur Anwendung in einem Gastronomiebetrieb, umfassend die Verfahrensschritte:
a. Ermitteln und Speichern der Information über die von einem Gast (5) übernommenen Speisen und/oder Getränke mit Hilfe eines an einem Geschirrteil (3) angeordneten Datenträgers (4);
b. Auslesen der im Datenträger (4) enthaltenen Information, insbesondere in einer Identifizierungsstation (6);
c. Ermitteln eines Preises für die Getränke und/oder Speisen.

Die Abrechnung kann dadurch schneller erfolgen.

## Beschreibung

Die Erfindung betrifft ein Verfahren zur automatisierten Abrechnung von Speisen und/oder Getränken, insbesondere zur Anwendung in einem Gastronomiebetrieb, sowie ein Warenwirtschaftssystem.

Im Rahmen der Erfindung werden unter einem Gastronomiebetrieb insbesondere ein Selbstbedienungs- oder free-flow-Restaurant, insbesondere Mitarbeiterkantinen oder ähnlich strukturierte gastronomische Einrichtungen verstanden.

In derartigen Gastronomiebetrieben ist man bestrebt, bei dem Gast nach der Speisen- oder Getränkeübernahme möglichst ohne Wartezeiten einfach und fehlerfrei abzurechnen.

Aus diesem Grund finden bereits unterschiedliche Kassensysteme, meist auf der Basis von geschlossenen oder MS-Windows-kompatiblen Softwarelösungen in Verbindung mit bargeldlosen Abrechnungssystemen (berührungsfreie Magnetkartenleser) Anwendung. Allen vorhandenen Lösungen ist der Nachteil gemein, dass der Prozess der Preiserfassung nicht automatisiert, sondern über die manueiie Eingabe durch das Kassenpersonal erfolgt. Im Bereich "nicht frischer", d. h. vorab abgepackter Speisen und Getränke, kommen teilweise Barcode-Lösungen zum Einsatz, die zwar eine raschere Preiserfassung ermöglichen, aber immer noch eine manuelle Preiserfassung erfordern.

In der Gastronomie werden im Bereich frischer, d. h. vorab unverpackter Speisen und Getränke bisher am Markt keine automatisierten und damit effektiveren und effizienteren Abrechnungslösungen als die manuelle Datenerfassung angeboten.

Aufgabe der vorliegenden Erfindung ist es demgegenüber, ein Verfahren und ein System bereitzustellen, mit denen die Abrechnung von Speisen und Getränken schneller und einfacher erfolgen kann.

Erfindungsgemäß wird diese Aufgabe auf ebenso überraschend einfache wie wirkungsvolle Art und Weise durch ein Verfahren zur automatisierten Abrechnung von Speisen und/oder Getränken, insbesondere zur Anwendung in einem Gastronomiebetrieb, gelöst, umfassend die Verfahrensschritte:
a. Ermitteln und Speichern der Information über die von einem Gast übernommenen Speisen und/oder Getränke mit Hilfe eines an einem Geschirrteil angeordneten Datenträgers;
b. Auslesen der im Datenträger enthaltenen Information, insbesondere in einer Identifizierungsstation;
c. Ermitteln eines Preises für die Getränke und/oder Speisen.

Mit einem derartigen Verfahren kann die Abrechnung von Speisen und/oder Getränken automatisiert erfolgen. Unter einem Geschirrteil werden unterschiedliche Gefäße, wie beispielsweise Teller, Becher, Tassen, Gläser, Schüsseln, aber auch Tabletts verstanden, auf denen das Geschirr mit den Speisen abgestellt wird. Der Datenträger kann somit an den einzelnen Geschirrteilen, wie beispielsweise Teller, Tassen oder Glas oder dergleichen oder einem Tablett angeordnet sein. Die eine Speise betreffende Information kann somit jedem einzelnen Gefäß zugeordnet werden, das die Speisen aufnimmt, oder alle Speisen, die in irgendeiner Form auf dem Tablett abgestellt werden, können in einem an dem Tablett angeordneten Datenträger registriert werden. Die die Speisen und/oder Getränke beschreibende Information kann der Preis der Speise und/oder des Getränks sein. Das Ermitteln des Preises in der Identifizierungsstation umfasst dann die Addition der einzelnen Preise. Die Information kann jedoch lediglich eine Identifikation der Speise sein, sodass in der Identifizierungsstation oder einer nachgeordneten Station anhand der Identifizierung jeder Speise ein Preis zugeordnet werden kann und diese Preise anschließend zu einem Gesamtpreis addiert werden können. Dies hat den Vorteil, dass die Speisen immer gleich kodiert sein können und nicht bei einer Preisänderung die Kodierung der einzelnen Speisen geändert werden muss. Der Identifizierungsstation kann beispielsweise ein Automat nachgeordnet sein, wo der Gast seine Speisen bezahlen kann. Daraus wird deutlich, dass das Verfahren zum Abrechnen von Speisen und/oder Getränken ohne Kassenpersonal erfolgen kann.

Die Information über die vom Gast aufgenommenen Speisen kann beispielsweise in einer Kodierungsstation an den Datenträger des Geschirrteils übermittelt und dort gespeichert werden.

Es besteht aber auch die Möglichkeit, den Datenträger mit einer das Geschirrteil identifizierenden Kodierung zu versehen, die an einer Speisenausgabe ausgelesen wird. Aus der Kodierung und einer Kennung der Speisenausgabe kann dann die Information über die vom Gast übernommenen Speisen und/oder Getränke ermittelt werden. Dies ist möglich, da ja bekannt ist, was an einer bestimmten Speisenausgabe an einem bestimmten Tag für Speisen und Getränke in welchen Typen von Geschirrteilen ausgegeben werden.

In einer bevorzugten Verfahrensvariante kann vorgesehen sein, dass ein Gast, der die Speisen und/oder Getränke erwerben möchte, identifiziert wird. Durch diese Maßnahme können die Speisen und Getränke einem Gast zugeordnet werden.

Besonders bevorzugt ist es, wenn der Gast über eine Gästekarte identifiziert wird. Die Identifizierung kann beispielsweise elektromagnetisch erfolgen. Beispielsweise kann als Gästekarte ein Betriebsausweis dienen, insbesondere wenn der Gastronomiebetrieb eine Betriebskantine ist.

Alternativ ist es denkbar, dass der Gast über einen Fingersensor oder über eine Iriserkennung identifiziert wird. Diese Art der Erkennung oder Identifizierung ist möglicherweise zuverlässiger als die Identifizierung mittels Gästekarte.

Alternativ oder zusätzlich zu einem Zahlautomat kann vorgesehen sein, dass ein Konto oder Guthaben des Gastes mit dem ermittelten Preis belastet wird. Dadurch wird die Abrechnung für einen Gast noch einfacher. Beispielsweise kann das Lohnkonto, ein Kreditkartenkonto oder ein Bankkonto des Gastes belastet werden. Alternativ kann der Gast eine Art Geldkarte haben, von deren Guthaben der ermittelte Preis abgezogen wird.

Der Grad der Automatisierung kann erhöht werden, wenn die die Speisen und/oder Getränke beschreibende Information und die Gästeidentifizierung an ein Abrechnungssystem übermittelt wird. Das Abrechnungssystem kann beispielsweise eine Lohnbuchhaltung, ein Kassensystem und ein Buchungssystem umfassen oder an derartige Systeme angeschlossen sein. Hier wird deutlich, dass der Vorteil der Erfindung insbesondere bei Mitarbeiterkantinen zum Tragen kommt, wo der Preis für die Speisen und/oder Getränke unmittelbar dem Gehaltskonto eines Mitarbeiters belastet werden kann.

Im Idealfall, beispielsweise in einer Mitarbeiterkantine, wird das Lohnkonto eines Mitarbeiters belastet, wenn dieser zusammen mit den Speisen und seiner Mitarbeiterkennung an der Identifizierungsstation vorbeigeht. Das Abstellen der Speisen in oder an der Identifizierungsstation kann daher unter Umständen entfallen.

Bei einer vorteilhaften Verfahrensvariante erfolgt die Kodierung und Identifizierung der Speisen und/oder Getränke berührungslos, insbesondere elektromagnetisch. Dadurch kann ein schneller und zuverlässiger Datenaustausch erfolgen. Es ist kein Personal zur Erfassung der Preise notwendig. Bei elektromagnetischer Übertragung können größere Distanzen als bei einer optischen Erfassung der Daten überwunden werden. Außerdem ist kein unmittelbarer Sichtkontakt zwischen Geschirrteil und Schreib- oder Lesestation notwendig.

Die Datenübertragung zwischen Datenträger und Kodierungsstation und/oder Identifizierungsstation erfolgt vorzugsweise im Duplexverfahren.

Bei einer bevorzugten Verfahrensvariante werden die benutzten Geschirrteile dekodiert, sodass sie wieder verwendet werden können. Insbesondere werden die Informationen aus den Datenträgern gelöscht.

Um die Systemzuverlässigkeit sicherzustellen, ist es vorteilhaft, wenn die Geschirrteile einem Kodierungsfunktionstest unterzogen werden.

Vorrichtungsmäßig betrifft die Erfindung ein Warenwirtschaftssystem, insbesondere zur Verwendung in der Gastronomie, umfassend:
a. Zumindest ein Geschirrteil, das einen beschreibbaren Datenträger umfasst,
b. zumindest eine Identifizierungsstation zum Auslesen der im Datenträger gespeicherten Information.

Wahlweise kann auch eine Kodierungsstation zum Beschreiben des Datenträgers mit einer Information über die von einem Gast übernommenen Speisen und/oder Getränke vorgesehen sein.

Mit einem derartigen System kann der Abrechnungsprozess in einem Gastronomiebetrieb effizienter gestaltet werden. Dabei kann vorgesehen sein, dass alle zum Warenwirtschaftssystem gehörenden Geschirrteile einen beschreibbaren Datenträger aufweisen oder dass nur einige Geschirrteile einen Datenträger aufweisen. Insbesondere kann vorgesehen sein, dass nur die Tabletts, auf denen Geschirrteile mit Speisen abgestellt werden können, einen beschreibbaren Datenträger aufweisen, in den Informationen betreffend aller auf dem Tablett abgestellter Speisen und/oder Getränke geschrieben werden.

Bei einer bevorzugten Ausgestaltung der Erfindung weist das Geschirrteil einen Transponder auf. Dadurch kann das Warenwirtschaftssystem als automatisches, sicht- und berührungsfrei arbeitendes RFID (Radio Frequency Identification) System betrieben werden. In Abhängigkeit vom Einsatzfeld arbeitet das System mit induktiver Kopplung in den Arbeitsfrequenzen ≤ 135 kHz, 6,78 MHz oder 13,56 MHz. Als Transponder werden vorzugsweise passive read-and-write Transponder zum kollisionsfreien Auslesen der zu identifizierenden Daten verwendet.

Vorzugsweise ist in dem Warenwirtschaftssystem zumindest eine Gästekarte vorgesehen, die Mittel zur Identifizierung des Gastes aufweist. Als Mittel zur Identifizierung kommen Magnetstreifen, Chips oder Transponder infrage. Durch diese Maßnahme können die die Speisen oder Getränke betreffenden Informationen einem Gast zugeordnet werden. Insbesondere kann vorgesehen sein, dass die Identifizierungsstation derart ausgebildet ist, dass sie auch die Identifizierung des Gastes übernehmen kann.

Besonders bevorzugt ist es, wenn die Identifizierungsstation an ein Abrechnungssystem angeschlossen ist. Die Effizienz kann dadurch erhöht werden.

In bevorzugter Ausgestaltung der Erfindung sind zumindest Teile des Warenwirtschaftssystems miteinander vernetzt, insbesondere mittels LAN, WLAN oder Bluetooth.

Zur Löschung der Informationen in einem Datenträger ist vorzugsweise eine Dekodierungsstation vorgesehen. Um sicherzustellen, dass die Informationen in den Datenträgern tatsächlich gelöscht wurden und dass einem Gast nicht die falsche Speise berechnet wird, kann eine Teststation vorgesehen sein.

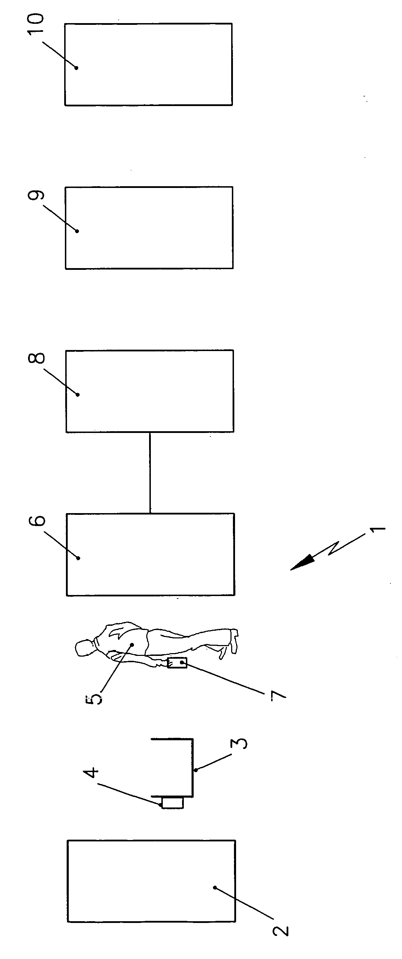

Weitere Merkmale und Vorteile der Erfindung ergeben sich aus der nachfolgenden detaillierten Beschreibung eines Ausführungsbeispiels der Erfindung anhand der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Die einzige Figur zeigt eine stark vereinfachte Darstellung eines Warenwirtschaftssystems.

Das Warenwirtschaftssystem 1 umfasst eine Kodierungsstation 2. Gleichzeitig mit dem Befüllen mit Speisen und/oder Getränken wird das jeweils gefüllte Geschirrteil 3 bzw. ein daran angeordneter Datenträger 4 durch die Kodierungsstation 2 berührungslos elektromagnetisch mit Information kodiert bzw. beschrieben, die die eingefüllten Speisen und/oder Getränke kennzeichnet. Das Befüllen mit Speisen und/oder Getränken kann durch den Gast 5 selbst oder durch Personal erfolgen. Bei Ausgabe von Speisen an festen Speisenausgaben durch Personal kann auch auf die Kodierungsstation 2 verzichtet werden. Der Datenträger 4 kann dann eine feste, das Geschirrteil identifizierende Kodierung aufweisen, aus der zusammen mit einer Kennung der Speisenausgabe die Information über die enthaltenen Speisen oder Getränke genommen werden kann.

in einer nachgeiagerten Identifizierungsstation 6 werden die übernommenen Speisen und/oder Getränke über das kodierte Geschirrteil 3 ebenfalls elektromagnetisch automatisch sicht- und berührungsfrei identifiziert. Bei der dargestellten bevorzugten Ausführungsform wird der kaufwillige Gast 5 über eine Gästekarte 7 ebenfalls identifiziert.

Die Kodierungsstation 2 umfasst vorzugsweise eine Sendeeinrichtung zum Senden von Information an den Datenträger 4, wobei dieser vorzugsweise eine Empfangs- und/oder Sendeeinrichtung umfasst oder mit einer solchen in Verbindung steht. Die Identifizierungsstation 6 umfasst dementsprechend eine Empfangseinrichtung, um die von dem Datenträger 4 gesendete Information zu empfangen.

Die Speisen und/oder Getränke können dem Gast dadurch zugeordnet werden und über ein angeschlossenes Abrechnungssystem 8 dem Gast 5 verrechnet werden. Anschließend kann das benutzte und kodierte Geschirrteil 3 bei der Rückgabe in einer Dekodierungsstation 9 berührungslos elektromagnetisch dekodiert und in einer Teststation 10 einem Kodierungsfunktionstest unterzogen werden. Das Warenwirtschaftssystem 1 kann einen Leitrechner aufweisen, der mit zumindest einem Teil der Komponenten des Warenwirtschaftssystems 1 vernetzt ist.

## Patentansprüche

1. Verfahren zur automatisierten Abrechnung von Speisen und/oder Getränken, insbesondere zur Anwendung in einem Gastronomiebetrieb, umfassend die Verfahrensschritte:
a. Ermitteln und Speichern der Information über die von einem Gast (5) übernommenen Speisen und/oder Getränke mit Hilfe eines an einem Geschirrteil (3) angeordneten Datenträgers (4);
b. Auslesen der im Datenträger (4) enthaltenen Information, insbesondere in einer Identifizierungsstation (6);
c. Ermitteln eines Preises für die Getränke und/oder Speisen.

2. Verfahren nach Anspruch 1, **dadurch gekennzeichnet, dass** die Information über die von einem Gast (5) übernommenen Speisen und/oder Getränke an den Datenträger (4) übermittelt und dort gespeichert wird.

3. Verfahren nach Anspruch 1, **dadurch gekennzeichnet, dass** der Datenträger (4) eine Kodierung enthält, die an einer Speisenausgabe ausgelesen wird, und dass aus der Kodierung des Datenträgers (4) und der Kennung der Speisenausgabe die Information über die vom Gast übernommenen Speisen und/oder Getränke ermittelt wird.

4. Verfahren nach einem der vorhergehenden Ansprüche, **dadurch gekennzeichnet, dass** ein Gast (5), der die Speisen und/oder Getränke erwerben möchte, identifiziert wird.

5. Verfahren nach einem der vorhergehenden Ansprüche, **dadurch gekennzeichnet, dass** der Gast (5) über eine Gästekarte (7) identifiziert wird.

6. Verfahren nach einem der vorhergehenden Ansprüche, **dadurch gekennzeichnet, dass** der Gast (5) über einen Fingersensor oder über eine Iriserkennung identifiziert wird.

7. Verfahren nach einem der vorhergehenden Ansprüche, **dadurch gekennzeichnet, dass** ein Konto oder Guthaben des Gastes (5) mit dem ermittelten Preis belastet wird.

8. Verfahren nach einem der vorhergehenden Ansprüche, **dadurch gekennzeichnet, dass** die die Speisen und/oder Getränke beschreibende Information und die Gästeidentifizierung an ein Abrechnungssystem (8) übermittelt wird.

9. Verfahren nach einem der vorhergehenden Ansprüche, **dadurch gekennzeichnet, dass** die Kodierung und Identifizierung der Speisen und/oder Getränke berührungslos, insbesondere elektromagnetisch erfolgt.

10. Verfahren nach einem der vorhergehenden Ansprüche, **dadurch gekennzeichnet, dass** die Datenübertragung zwischen Datenträger (4) und Kodierungsstation (2) und/oder Identifizierungsstation (6) im Duplexverfahren erfolgt.

11. Verfahren nach einem der vorhergehenden Ansprüche, **dadurch gekennzeichnet, dass** die benutzten Geschirrteile (3) dekodiert werden.

12. Verfahren nach einem der vorhergehenden Ansprüche, **dadurch gekennzeichnet, dass** die Geschirrteile (3) einem Kodierungsfunktionstest unterzogen werden.

13. Warenwirtschaftssystem (1), insbesondere zur Verwendung in der Gastronomie, umfassend:
a. Zumindest ein Geschirrteil (3), das einen beschreibbaren Datenträger (4) umfasst,
b. zumindest eine Identifizierungsstation (6) zum Auslesen der im Datenträger (4) gespeicherten Information.

14. Warenwirtschaftssystem nach einem der vorhergehenden Ansprüche, **dadurch gekennzeichnet, dass** das Geschirrteil (3) einen Transponder aufweist.

15. Warenwirtschaftssystem nach einem der vorhergehenden Ansprüche, **dadurch gekennzeichnet, dass** zumindest eine Gästekarte (7) vorgesehen ist, die Mittel zur Identifizierung des Gastes (5) aufweist.

16. Warenwirtschaftssystem nach einem der vorhergehenden Ansprüche, **dadurch gekennzeichnet, dass** die Identifizierungsstation (6) an ein Abrechnungssystem (8) angeschlossen ist.

17. Warenwirtschaftssystem nach einem der vorhergehenden Ansprüche, **dadurch gekennzeichnet, dass** zumindest Teile des Warenwirtschaftssystems (1) miteinander vernetzt sind, insbesondere mittels LAN, WLAN oder Bluetooth.

18. Warenwirtschaftssystem nach einem der vorhergehenden Ansprüche, **dadurch gekennzeichnet, dass** eine Dekodierungsstation (9) vorgesehen ist.

19. Warenwirtschaftssystem nach einem der vorhergehenden Ansprüche, **dadurch gekennzeichnet, dass** eine Teststation (10) vorgesehen ist.
